# EUROPEAN PATENT APPLICATION

(11) **EP 4 053 050 A1**
(43) Date of publication of application: **07.09.2022**
(21) Application number: 21161007.6
(22) Date of filing: 05.03.2021
(51) Int. Cl.: B65G 47/244, B08B 9/08, B08B 9/32

(54) **TREATING MODULE FOR TREATING CONTAINERS**

(71) Applicant: Europool S.r.l., 43036 Fidenza (PR) (IT)
(72) Inventor: PRIERO, Marco, 43036 FIDENZA (PARMA) (IT)
(74) Representative: Dondi, Silvia

(57) **Abstract**

A treating module (1) for treating containers (100), comprising:
- a passage tunnel (2) of the containers (100);
- at least a first conveyor (3) configured to slide inside the tunnel (2) so as to advance the containers (100) along an advancement trajectory (T);
- treating means (4) of the containers (100) distributed inside the tunnel (2);
- rotating means (6) configured to intercept the containers (100) moving on the first conveyor (3) and to impart a rotation on each container (100) around a corresponding axis (AA).

## Description

The present invention relates to a treating module for treating containers usable in different types of apparatuses, such as drying, washing, sterilisation, labelling apparatuses.

The invention applies to the field of bottling, packaging for the food, pharmaceutical or similar sectors.

Linear apparatuses exist on the market which include subjecting containers in transit in a tunnel to different types of treatment, such as drying, washing, sterilising or heat-shrink labelling.

As a function of the type of treatment, the containers in transit in the tunnel are subjected to the action of different fluids (air, washing or sanitising fluids, vapour, etc.), delivered by fixed or adjustable nozzles distributed along the tunnel.

During the linear advancement thereof - for example on a conveyor belt passing through the tunnel - the containers are struck by the flow of delivered fluid, which hits the outer surface thereof. However, it is clear that the outer surface of the containers is not treated uniformly. In particular, there are shaded areas of the outer surface which are at risk of being insufficiently treated or even not reached by the flow of delivered fluid.

In this context, the technical task at the basis of the present invention is to propose a treating module for treating containers which overcomes the aforementioned drawbacks of the prior art.

In particular, the object of the present invention is to provide a treating module for treating containers in which the outer surface of each container is subjected to a more uniform treatment with respect to the known solutions.

A further object of the present invention is to propose a more reliable treating module for treating containers, i.e., capable of minimising untreated shaded areas of the outer surfaces of the containers.

The stated technical task and specified objects are substantially achieved by a treating module for treating containers comprising:
- a passage tunnel of the containers;
- at least a first container conveyor, which is configured to slide inside the tunnel so as to advance the containers along an advancement trajectory;
- treating means for treating the containers, distributed inside the tunnel;
- rotating means configured to intercept the moving containers on the first conveyor and to impart a rotation on each of the containers around a corresponding axis.

In accordance with an aspect of the invention, the treating module further comprises guiding means operably active on the containers in transit in the tunnel to facilitate the movement thereof according to the advancement trajectory.

In accordance with an embodiment, the rotating means comprises a fixed plate-like element positioned inside the tunnel and extending alongside the first conveyor.

Preferably, the fixed plate-like element is parallel to the first conveyor. Preferably, the guiding means is arranged so as to force each container to rest a bottom thereof partially on the first conveyor and partially on the fixed plate-like element.

The guiding means comprises for example a pair of parallel sides or a plurality of pairs of parallel sides.

In accordance with another embodiment, the rotating means comprises a second conveyor positioned inside the tunnel and extending alongside the first conveyor.

In particular, the second conveyor is configured to slide inside the tunnel so as to advance the containers along the advancement trajectory.

The first conveyor and the second conveyor are configured to slide at different speeds from each other.

Preferably, the guiding means is arranged so as to force each container to rest a bottom thereof partially on the first conveyor and partially on the second conveyor.

The guiding means comprises for example a pair of parallel sides or a plurality of pairs of parallel sides.

In accordance with another embodiment, the rotating means comprises two belt transmission members positioned inside the tunnel on opposite sides of the first conveyor and extending alongside the first conveyor.

The belt transmission means may be located at the same height with respect to the first conveyor or at different heights.

In particular, the belt transmission members are arranged so as to come into contact with an outer side surface of the containers advancing along the first conveyor.

The belt transmission members are configured to slide at different speeds from each other.

Preferably, the guiding means is arranged so as to force each container to rest a bottom thereof on the first conveyor.

The guiding means comprises for example a pair of parallel sides or a plurality of pairs of parallel sides.

In accordance with an aspect of the invention, the treating means comprises a plurality of nozzles for delivering a fluid on the containers in transit in the tunnel.

The fluid can be of a different type, so as to obtain a different type of treatment of the containers.

In accordance with an embodiment, the fluid is air which laps the body of the containers so as to dry them, whereby the treating module is a drying module.

In accordance with an embodiment, the fluid is an aqueous solution which is delivered on the containers so as to wash them, whereby the module is a washing or rinsing module.

In accordance with an embodiment, the fluid comprises a sterilising agent, whereby the containers are sterilised during the passage in the tunnel. In such a case, the treating module is a sterilising module.

The sterilisation can also be performed by delivering VHP from the nozzles.

In accordance with an embodiment, the treating module is a heat-shrinking module of plastic films previously applied on the body of the containers in an enveloping manner.

In this case, the nozzles are configured to deliver vapour so as to achieve the heat-shrinking of the films.

Multiple treatment modules can be arranged in a cascade so as to obtain a treating apparatus (e.g. drying, washing, sterilising, etc.) capable of meeting the desired production capacities.

Further characteristics and advantages of the present invention will more fully emerge from the non-limiting description of a preferred but not exclusive embodiment of a treating module for treating containers, as illustrated in the accompanying drawings, in which:
- figures 1 to 3 illustrate a first embodiment of a treating module for treating containers, respectively in front, plan and side view;
- figures 4 to 6 illustrate a second embodiment of a treating module for treating containers, respectively in front, plan and side view;
- figures 7 to 9 illustrate a third embodiment of a treating module for treating containers, respectively in front, plan and side view;
- figure 10 illustrates a treating apparatus for treating containers composed of multiple treating modules, in accordance with the present invention, in a side view.

With reference to the figures, number 1 indicates a treating module of containers 100 such as bottles, jerry cans, dispensers or the like.

The treating module 1 comprises a tunnel 2 inside which the containers 100 advance along an advancement trajectory T.

In accordance with the embodiment disclosed and illustrated herein, the advancement trajectory T is linear.

In accordance with an alternative embodiment (which is not illustrated), the advancement trajectory T is curvilinear.

In accordance with a further embodiment (which is not illustrated), the advancement trajectory T is a broken line consisting of different rectilinear lines and/or curvilinear portions. Conveying means of the containers 100 is present in the tunnel 2 which allows the containers to advance along the advancement trajectory T one after the other.

In particular, the conveying means comprises at least a first conveyor 3 which extends and slides inside the tunnel 2.

In accordance with a preferred embodiment, the first conveyor 3 is a linear conveyor of the belt or chain type.

Treating means 4 of the containers 100 is present inside the tunnel 2. Preferably, the treating means 4 is distributed over the entire length of the tunnel 2.

In the embodiments described and illustrated herein, the treating means 4 comprises a plurality of nozzles 5 for delivering a fluid on the containers 100 in transit in the tunnel 2.

The fluid delivered by the nozzles 5 varies as a function of the type of treatment. For example, the fluid may be air or an aqueous solution or a fluid containing a sterilising agent or vapour, as will be better detailed below.

In accordance with an embodiment variant, the treating means 4 is configured to perform a surface heat treatment on the containers 100 in transit in the tunnel 2.

In accordance with a further embodiment, not illustrated, the treating means 4 comprises one or more radiation emitters. For example, the treating means 4 comprises a plurality of UV or infrared or soft-X lamps. Originally, the treating module 1 comprises rotating means 6 configured to intercept the moving containers 100 on the first conveyor 3 and to rotate each of the containers around a corresponding axis AA.

In particular, such an axis AA is inclined with respect to the advancement trajectory T.

In the accompanying drawings, the axis AA is illustrated as the axis of symmetry of the container 100, which is substantially orthogonal to the advancement trajectory T. However, the axis AA around which the container 100 is rotated is not necessarily the axis of symmetry of the container. It is also not necessary for the axis AA to be orthogonal to the advancement trajectory T.

The advancing module 1 further comprises guiding means 7 operatively active on the containers 100 in transit in the tunnel 2 to facilitate the movement thereof according to the advancement trajectory T.

In particular, the guiding means 7 is shaped so as to limit the lateral movement of each container 100 in transit on the first conveyor 3. In this context, lateral movement means a movement of the container 100 in a different direction (for example orthogonal) with respect to the main extension direction of the first conveyor 3.

In accordance with an aspect of the invention, the guiding means 7 comprises at least one pair of sides 17 parallel to each other and parallel to the main extension direction of the first conveyor 3.

In the embodiments described and illustrated herein, the guiding means 7 comprises two pairs of sides 17, 117 parallel to each other and parallel to the main extension direction of the first conveyor 3. Preferably, a first pair of sides 17 is at a first height with respect to the first conveyor 3 and a second pair of sides 117 is at a second height, higher than the first height, with respect to the first conveyor 3.

In accordance with an aspect of the invention, the rotating means 6 is configured to partially intercept the bottom 100a of each container 100.

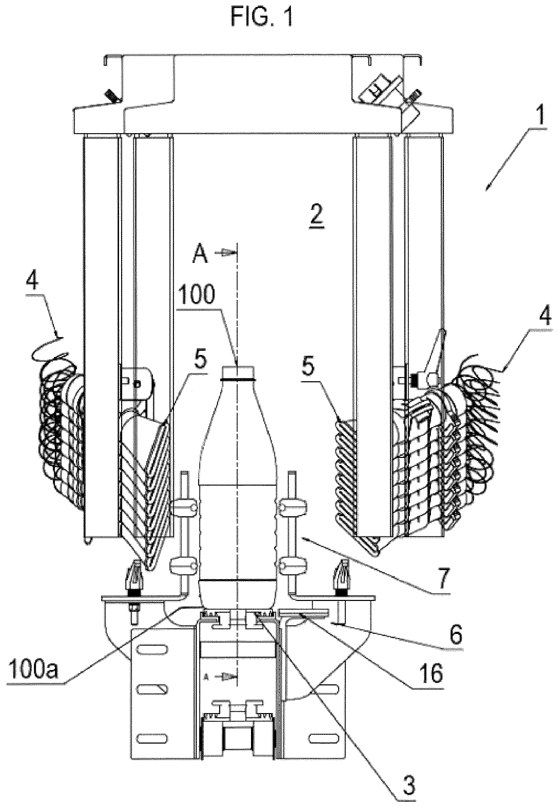

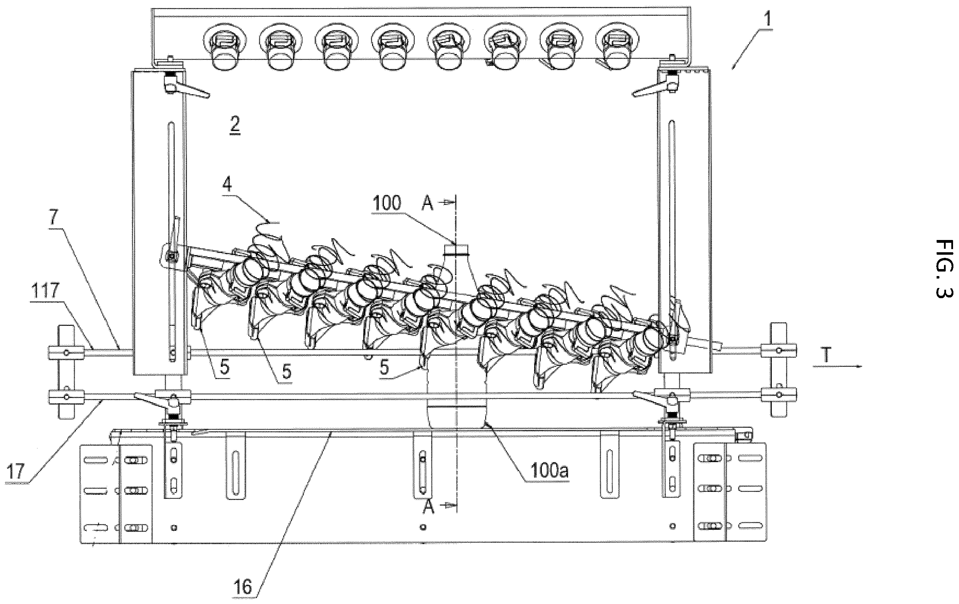

In accordance with a first embodiment, illustrated in figures 1 to 3, the rotating means 6 comprises a fixed plate-like element 16 positioned inside the tunnel 2 and having an extension alongside the first conveyor 3.

For example, the fixed plate-like element 16 is a flat plate.

In particular, the fixed plate-like element 16 extends parallel to the first conveyor 3.

The fixed plate-like element 16 and the first conveyor 3 are spaced apart or in contact.

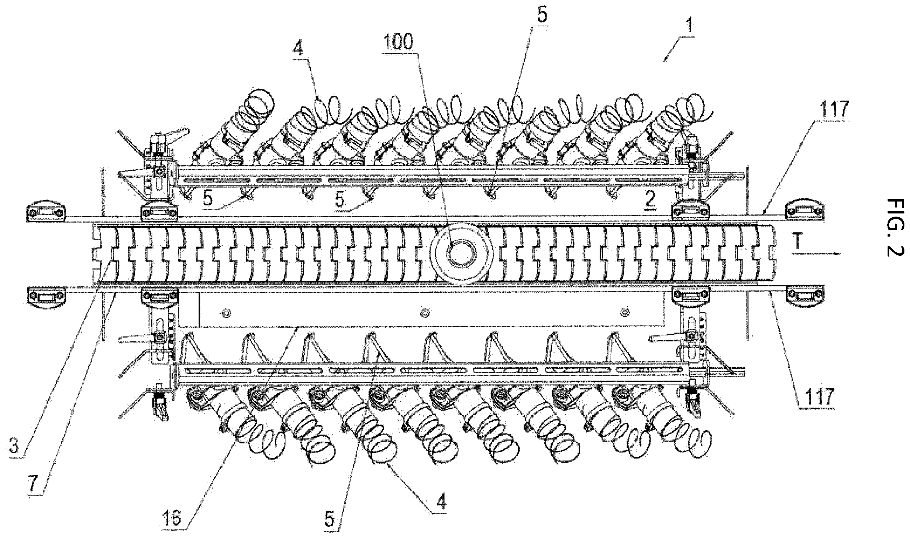

In this first embodiment, the guiding means 7 is arranged so as to force each container 100 to rest a bottom 100a thereof partially on the first conveyor 3 and partially on the fixed plate-like element 16 as seen in figures 1 and 2.

Thereby, the sliding of the first conveyor 3 forces each container 100 to advance in the tunnel 2 along the advancement trajectory T, while the partial resting of the bottom 100a on the fixed plate-like element 16 generates a friction which determines the rotation of the container 100 itself around an axis AA. Thus, the container 100 advances along the advancement path T, confined by the sides 17, 117 and being simultaneously subjected to a rotation (partial or total) around the corresponding axis AA.

Preferably, both the fixed plate-like element 16 and the first conveyor 3 extend over the entire length of the tunnel 2, as seen in figure 2. In accordance with the embodiment described and illustrated in figures 1 to 3, the first conveyor 3 also extends outside the tunnel 2, i.e. upstream and downstream of the tunnel 2 itself.

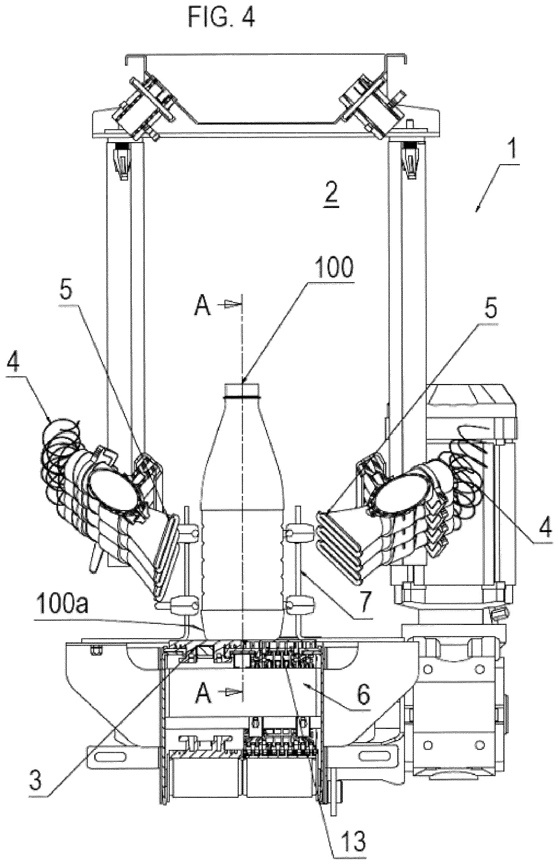

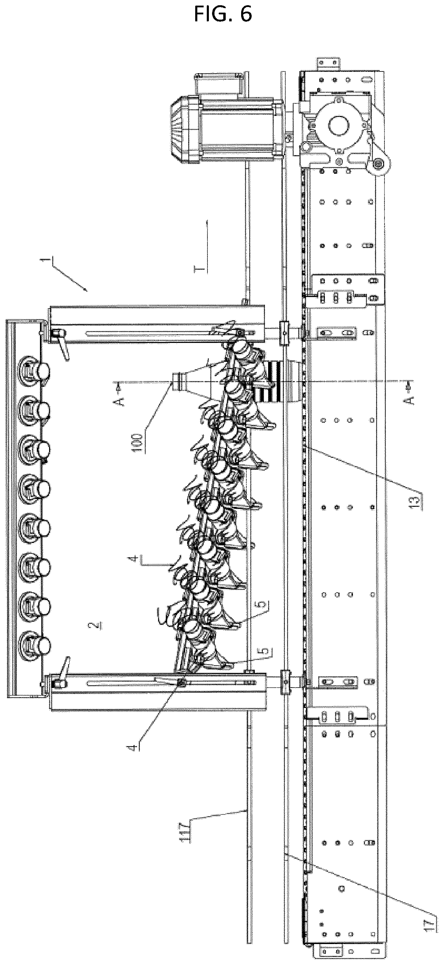

In accordance with a second embodiment, illustrated in figures 4 to 6, the rotating means 6 comprises a second conveyor 13 positioned inside the tunnel 2 and extending alongside the first conveyor 3.

Similar to the first conveyor 3, also the second conveyor 13 is configured to slide inside the tunnel 2 so as to advance the containers 100 along the advancement trajectory T.

Preferably, the second conveyor 13 is a linear conveyor of the belt or chain type.

In particular, the second conveyor 13 extends parallel to the first conveyor 3.

The first conveyor 3 and the second conveyor 13 are spaced apart or in contact.

The first conveyor 3 and the second conveyor 13 are configured to slide at different speeds from each other.

In this embodiment, the treating module 1 comprises a control unit (not shown) configured to control the sliding of the two conveyors 3, 13 in the same direction but with different speeds, adjustable as a function of production needs.

For example, the first conveyor 3 is moved by first motorised means, while the movement of the second conveyor 13 is managed by an inverter. Alternatively, the first conveyor 3 and the second conveyor 13 are moved respectively by first motorised means and by second motorised means, independent from each other.

In particular, the treating module 1 comprises first motorised means operably active on the first conveyor 3 to drive the sliding thereof and second motorised means operatively active on the second conveyor 13 to drive the sliding thereof.

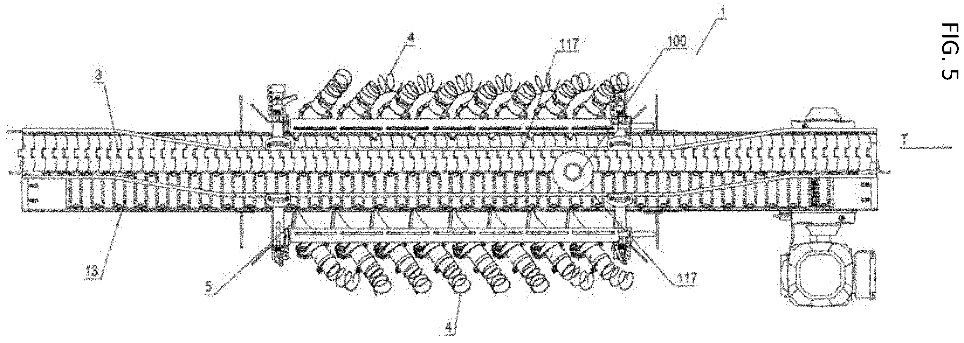

In this second embodiment, the guiding means 7 is arranged so as to force each container 100 to rest a bottom 100a thereof partially on the first conveyor 3 and partially on the second conveyor 13 as seen in figures 4 and 5.

The sliding of the first and the second conveyor 3, 13 in the same direction but with two distinct speeds forces each container 100 to advance in the tunnel 2 along the advancement trajectory T while undergoing a rotation around a rotation axis AA. Thus, the container 100 advances along the advancement trajectory T, confined by the sides 17, 117 and being simultaneously subjected to a rotation (partial or total) around a rotation axis AA thereof.

Preferably, both the conveyors 3, 13 extend over the entire length of the tunnel 2, as seen in figure 5. In accordance with the embodiment described and illustrated in figures 4 to 6, both the conveyors 3, 13 also extend outside the tunnel 2, i.e. upstream and downstream of the tunnel 2 itself.

In accordance with an embodiment variant, the second conveyor 13 is held stationary, while the first conveyor 3 is in motion.

This embodiment variant determines the rotation of the container 100 during the advancement thereof along the advancement trajectory T, similar to what occurs in the first embodiment. In fact, the second stationary conveyor 13 behaves like the fixed plate-like element 16.

In accordance with another embodiment variant, the rotating means 6 comprises further conveyors (beyond the first conveyor 3) positioned inside the tunnel 2 and extending alongside the first conveyor 3.

Similar to the first conveyor 3, also the further conveyors are configured to slide inside the tunnel 2 so as to advance the containers 100 along the advancement trajectory T.

Preferably, the further conveyors are linear conveyors of the belt or chain type.

In particular, such further conveyors extend parallel to the first conveyor 3. By sliding at different speeds (some may also be stationary), the conveyors determine a rotation of the container 100 during the advancement thereof along the advancement trajectory T.

In accordance with an aspect of the invention, the rotating means 6 is configured to laterally intercept each container 100, i.e. on the outer side surface 100b thereof.

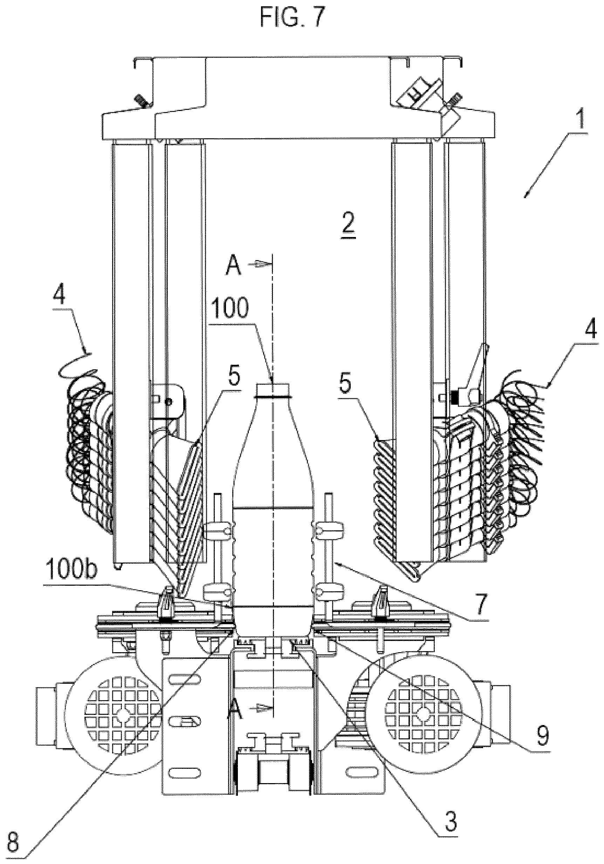

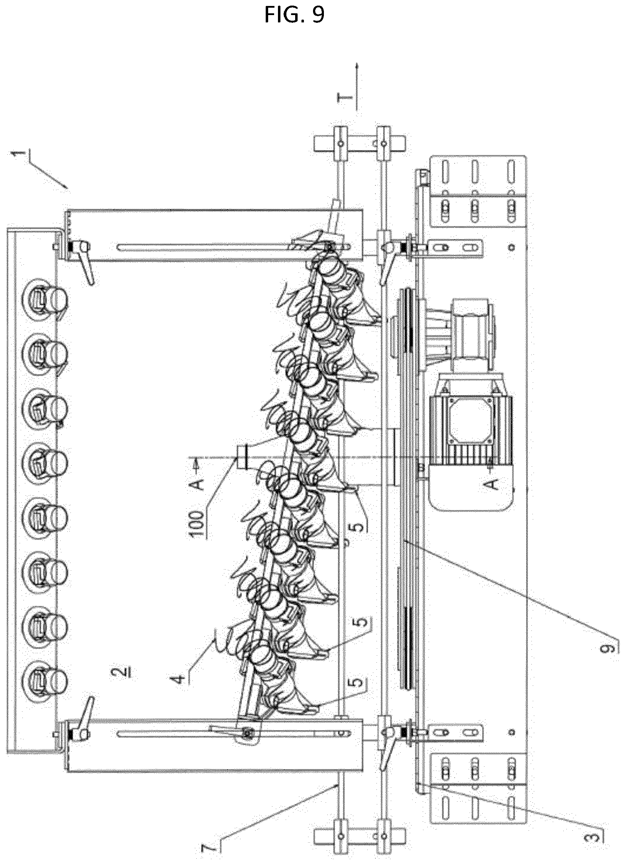

In accordance with a third embodiment variant, illustrated in figures 7 to 9, the rotating means 6 comprises two belt transmission members 8, 9 situated inside the tunnel 2 on opposite sides of the first conveyor 3 and extending alongside the latter.

In particular, the two belt transmission members 8, 9 comprise belts (e.g. rubberised belts) sliding in a direction parallel to the sliding direction of the first conveyor 3.

In particular, the two belt transmission members 8, 9 are arranged so as to come into contact with an outer side surface 100b of each container 100 placed on the first conveyor 3.

In the embodiment illustrated herein, the two belt transmission members 8, 9 are located at the same height with respect to the first conveyor 3.

However, such belt transmission members 8, 9 could be arranged at different heights with respect to the first conveyor 3 so as to come into contact with different portions of the side surface 100b of each container 100 moving on the first conveyor 3.

Originally, the two belt transmission members 8, 9 are configured to slide at different speeds from each other.

In this embodiment, the treating module 1 comprises a control unit (not shown) configured to control the sliding of the belts 8, 9 with different speeds from each other adjustable as a function of production needs.

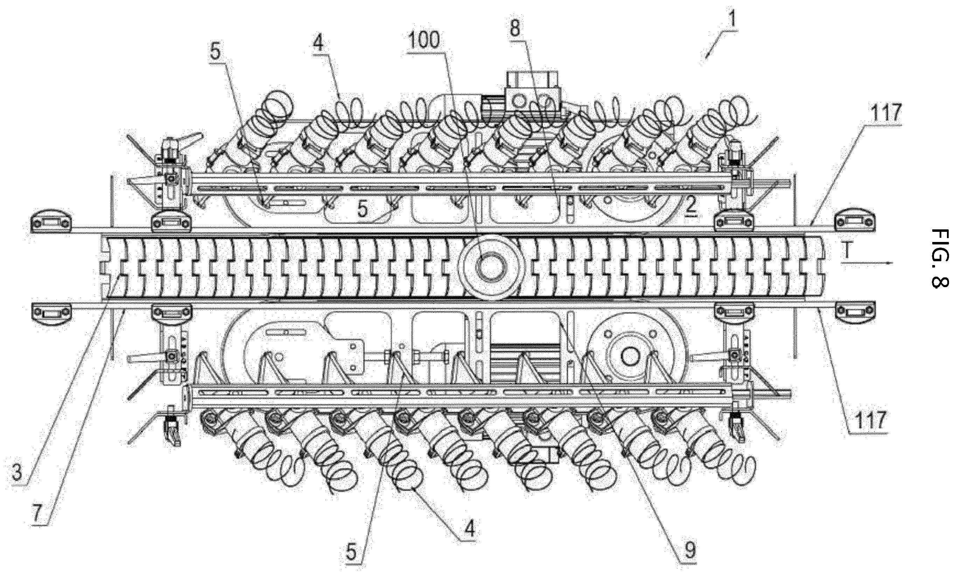

In this third embodiment, the guiding means 7 is arranged so as to force each container 100 to rest the bottom 100a thereof on the first conveyor 3, as seen in figures 7 and 8.

The sliding of the first conveyor 3 advances the containers 100 one after the other along the advancement trajectory T. During such an advancement, each container 100 is intercepted laterally by the sliding belts of the two belt transmission members 8, 9, which slide in the same direction but with different speeds, thus determining a partial or total rotation of the container 100.

In accordance with an embodiment variant, one of the belts slides while the other is held stationary. Also in this case a rotation is imposed on the container 100 in motion on the first conveyor 3. In accordance with another embodiment variant, the two belt transmission members 8, 9 are arranged so as to come into contact with the neck area of each container 100 placed on the first conveyor 3 or with a capsule applied to the mouth of each container 100 (which in this case is a bottle)

In accordance with an aspect of the invention, the rotating means 6 is configured to laterally intercept each container 100, in particular each bottle, in the neck area.

A further embodiment (not shown) includes that the rotating means 6 comprises a longitudinal profile placed at a predefined height with respect to the first conveyor 3 and extending in the extension direction of the first conveyor 3.

In particular, the longitudinal profile extends parallel to the first conveyor 3 and at the height of the neck area of the containers 100.

Thereby, the sliding of the first conveyor 3 forces each container 100 to advance in the tunnel 2 along the advancement trajectory T, while the contact of the neck of each container 100 with the longitudinal profile generates a friction which determines the rotation of the container 100 during the advancement.

As mentioned above, the treating means 4 may comprise nozzles 5 delivering different types of fluid, so as to obtain as many types of treatment as the containers 100.

In accordance with an aspect of the invention, the nozzles 5 are configured to deliver air. Thereby, a drying apparatus 10 is obtained.

In accordance with an aspect of the invention, the nozzles 5 are configured to deliver an aqueous solution. Thereby, a washing apparatus 10 is obtained.

In accordance with an aspect of the invention, the nozzles 5 are configured to deliver a fluid containing a sterilising substance (e.g., deliver VHP). Thereby, a sterilising apparatus 10 is obtained.

In accordance with an aspect of the invention, the nozzles 5 are configured to deliver vapour. The apparatus thus obtained is usable for the heat-shrinking of plastic films which have previously been applied around the body of the containers 100.

By arranging several treating modules 1 in a cascade, an apparatus having the desired production rate is obtained.

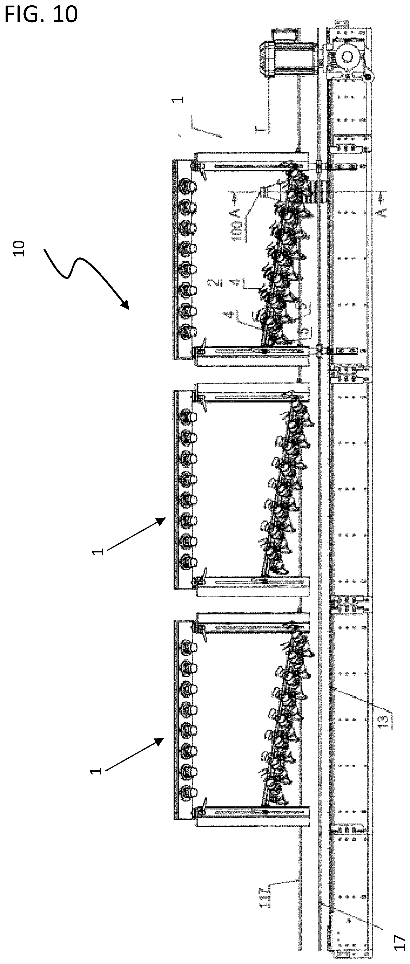

The conveying means of the containers 100 can be shared by the treating modules 1 arranged in a cascade. For example, in figure 10 an apparatus 10 is illustrated comprising three treating modules 1, according to the present invention, which share the conveying means (i.e. the first conveyor 3).

In other words, the conveying means is made as a single device which traverses all the tunnels 2 of the drying modules 1.

A treatment method of containers 100, according to the present invention, is described below.

The treatment method comprises the following steps:
- advancing the containers 100 one after the other along an advancement trajectory T on a first conveyor 3 configured to slide inside a tunnel 2;
- subjecting the containers 100 moving inside the tunnel 2 to the action of a fluid or radiation or to a heat treatment;
- imparting on the containers 100 moving in the tunnel 2 also a partial or total rotation around an axis AA so as to vary the surface of the containers 100 as they become exposed to the action of the fluid or radiation or heat treatment.

From the description given, the features of a treating module for treating containers according to the present invention appear clear, as do the advantages thereof.

In particular, by intercepting the containers during the advancement thereof in the tunnel (for example by means of the fixed plate-like element or by means of the further conveyor at a speed different from that of the main conveyor or by means of the two transmission belts placed laterally to the containers, etc.), the containers undergo a revolutionary motion, i.e., they are rotated around an axis which is inclined with respect to the advancement trajectory.

Thereby, all the side surfaces of the containers are exposed to the action of the treating means (be they fluid or radiation) during the transit thereof through the tunnel. The treatment thus obtained is more uniform and reliable than the known solutions, since untreated shaded areas are completely reduced or eliminated.

## Claims

1. A treating module (1) for treating containers (100), comprising:
- a passage tunnel (2) of the containers (100);
- at least a first conveyor (3) for the containers (100), which is configured to slide inside the tunnel (2) so as to advance the containers (100) along an advancement trajectory (T);
- treating means (4) of the containers (100) distributed inside the tunnel (2),
**characterised in that it comprises** rotating means (6) configured to intercept the containers (100) moving on the first conveyor (3) and to impart a rotation on each of said containers (100) around a corresponding axis (AA).

2. The treating module (1) according to claim 1, further comprising guiding means (7) operatively active on the containers (100) in transit in the tunnel (2) to facilitate the movement thereof according to the advancement trajectory (T).

3. The treating module (1) according to claim 2, wherein said rotating means (6) comprises a fixed plate-like element (16) positioned inside the tunnel (2) and extending alongside the first conveyor (3).

4. The treating module (1) according to claim 3, wherein said fixed plate-like element (16) is parallel to the first conveyor (3).

5. The treating module (1) according to claim 3 or 4, wherein the guiding means (7) is arranged so as to force each container (100) to rest a bottom (100a) thereof partially on the first conveyor (3) and partially on the fixed plate-like element (16).

6. The treating module (1) according to claim 2, wherein said rotating means (6) comprises a second conveyor (13) positioned inside the tunnel (2) and extending alongside the first conveyor (3).

7. The treating module (1) according to claim 6, wherein said second conveyor (13) is configured to slide inside the tunnel (2) so as to advance the containers (100) along the advancement trajectory (T), said first conveyor (3) and said second conveyor (13) being configured to slide at different speeds from each other.

8. The treating module (1) according to claim 6 or 7, wherein the guiding means (7) is arranged so as to force each container (100) to rest a bottom (100a) thereof partially on the first conveyor (3) and partially on the second conveyor (13).

9. The treating module (1) according to claim 2, wherein said rotating means (6) comprises two belt transmission members (8, 9) positioned inside the tunnel (2) on opposite sides of the first conveyor (3) and extending alongside said first conveyor (3), said belt transmission members (8, 9) being arranged so as to come into contact with an outer side surface (100b) of the containers (100) advancing along the first conveyor (3).

10. The treating module (1) according to claim 9, wherein said belt transmission members (8, 9) are configured to slide at different speeds from each other.

11. The treating module (1) according to claim 9 or 10, wherein the guiding means (7) is arranged so as to force each container (100) to rest a bottom (100a) thereof on the first conveyor (3).

12. The treating module (1) according to any one of the preceding claims, wherein said treating means (4) comprises a plurality of nozzles (5) for delivering a fluid on the containers (100) in transit in the tunnel (2).

13. A drying apparatus (10) comprising one or more treating modules (1) according to claim 12 arranged in a cascade, wherein said nozzles (5) are configured to deliver air.

14. A washing apparatus (10) comprising one or more treating modules (1) according to claim 12 arranged in a cascade, wherein said nozzles (5) are configured to deliver an aqueous solution.

15. A heat-shrinking apparatus (10) comprising one or more treating modules (1) according to claim 12 arranged in a cascade, wherein said nozzles (5) are configured to deliver vapour.
